# EUROPEAN PATENT APPLICATION

(11) **EP 1 871 052 A1**
(43) Date of publication of application: **26.12.2007**
(21) Application number: 06741715.4
(22) Date of filing: 25.04.2006
(51) Int. Cl.: H04L 12/56

(54) **PPP ACCESS TERMINAL,ACCESS SERVICE DEVICE AND A METHOD OF THE TERMINAL OBTAINING THE SERVER ADDRESS OF THE PROVIDER**

(30) Priority: 29.04.2005 CN 200510069414
(71) Applicant: Huawei Technologies Co., Ltd., Longgang District Shenzhen Guangdong 518129 (CN)
(72) Inventor: WEI, Jiahong, Huawei Administration Building, Shenzhen, Guangdong 518129 (CN); LI, Jun, Huawei Administration Building, Shenzhen, Guang Dong 518129 (CN)
(74) Representative: Goddar, Heinz J.
(86) International application number: PCT/CN2006/000784
(87) International publication number: WO 2006/116911

(57) **Abstract**

A method of a PPP access terminal obtaining a server address of the provider includes: when the PPP access terminal accesses a network through an access server, the access service device sends the provider's server address to the PPP access terminal. Then, after the PPP access terminal has obtained the provider's server address, it configures the address in local. The invention a method of obtaining the service server and the manager server addresses for the PPP access mode, which method can reduce the configure work in the process of service distribution, save the run cost of the provider. At the same time, the invention can support the roam service. The invention also discloses a PPP access terminal and an access service device.

## Description

### Field of the Invention

The present invention relates to the field of network communication technology, and particularly to a method for getting an address of a provider server by a Point-to-Point Protocol (PPP) access terminal, a PPP access terminal, and an access device.

### Background of the Invention

With the development of the broadband access technology, there emerge increasingly services carried over the broadband Internet Protocol (IP) network. Generally, to activate a service, the address of the service server needs to be configured in a user terminal in advance. Also, the telecommunication network provider may need to configure the address of management server in user terminals in advance to be able to manage these user terminals. Therefore, after a user terminal is powered on and connected to the network, it is allowed to communicate initiatively with the management server and the service server, to be managed by the network manager, and to register and obtain the service.

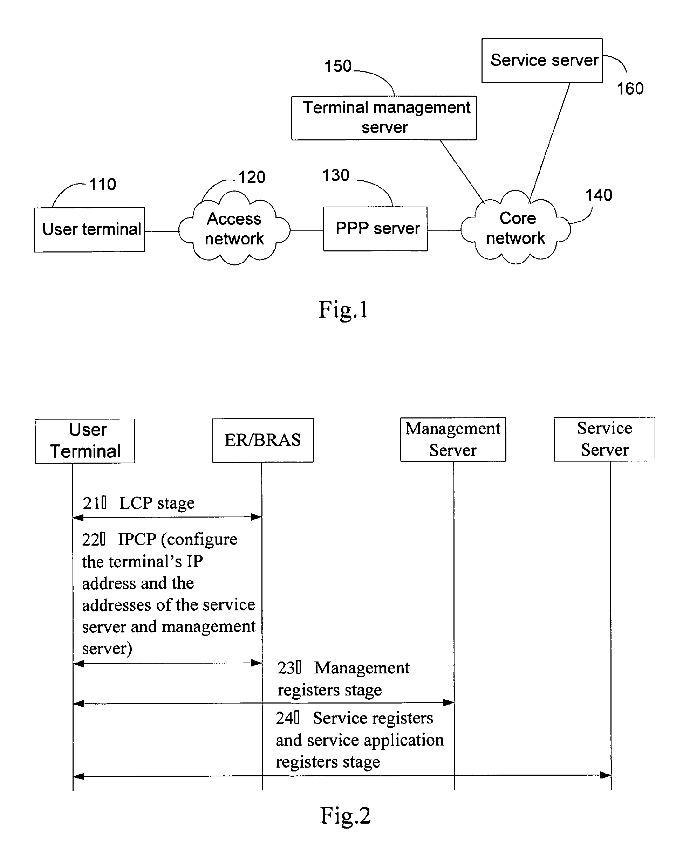

Before utilizing services, a user terminal needs to be connected to the network. Typically, there are two ways of connecting to a network including the PPP access and the Dynamic Host Configuration Protocol (DHCP) access. For the PPP access, as shown in Figure 1, the user terminal 110 is connected to the PPP server 130 through the access network 120. The PPP server 130 is, for example a Remote Access Server (RAS), a Broadband Remote Access Server (BRAS), or an Edge Router (ER) and so on. The PPP server 130 is provided to terminate the PPP protocol, and to transmit the IP data packet from the user terminal to the core network 140.

At present, the configuration is performed manually to ensure that the user terminal can obtain the addresses of the terminal management server 150 and of the service server 160. In particular, before the service is activated, the addresses of the management server and the service server are configured in a terminal manually by the provider or user.

Apparently, if the manual configuration is to be performed by the provider, the work load of the provider will increase greatly, thus the operation cost of the provider increases. If the manual configuration is to be performed by the user, since the user is required to have relatively good operation skills for the configuration, configuration errors occur easily, thus preventing the service from being activated in time.

Additionally, service nomadism can not be achieved in manner of manual configuration, i.e., after nomadizing to other access network, the user terminal can not obtain the address of the service server of the visited location. The nomadism means discrete mobility, that is, after switching to a different access network, the user utilizes the service of the home location through the access network of a visited location. Whereas the nomadism is different from the roaming. During the nomadism, the service will be interrupted.

### Summary of the Invention

In view of the disadvantages existing in the prior art, the object of the invention is to provide a method for getting an address of a provider server by a Point-to-Point Protocol (PPP) access terminal, thereby the PPP access terminal can easily obtain the addresses information of the management server and the service server.

The further object of the invention is to provide a PPP access terminal and an access service device.

The objects of the present invention are achieved through the following technical solution.

A method for getting an address of a provider server by a Point-to-Point Protocol (PPP) access terminal is provided according to an embodiment of the invention, including the following processes.

A. when a PPP access terminal is connected to the network through an access service device, the access service device sends, through an extended IP Control Protocol (IPCP) packet of the PPP, the address information of the provider server to the PPP access terminal;
B. the PPP access terminal gets, by analyzing the extended PPP IPCP packet, the address of the provider server and then configures the address locally.

The address of the provider server includes:
the address of the terminal management server and/or the address of the service server.

The access service device includes:
a broadband access server and/or an edge router.

The process A further includes the following process.
A1. after the PPP access terminal is connected to the network, at the phase of the PPP access terminal negotiating the network-layer parameters with the access service device, the access service device sends the address information of the provider server to the PPP access terminal.

The process A1 particularly includes the following process.
The PPP access terminal sends a message to the access service device, asking for the network-layer parameters;
Once receiving the message, the access service device adds the network-layer parameters, the service server address and the management server address into a response packet and sends the packet to the PPP access terminal.

Before process A1, the method further includes the following process.
After the PPP access terminal is connected the network, it first negotiates the link-layer parameters with the access server, and establishes corresponding communication link.

The method of the present invention further includes the following process.
The address of the provider server is configured in the access service device.

The method of the present invention further includes the following process:
The address of the provider server is configured in a remote device, and the access server is required to get remotely the address information of the provider server from the remote device.

A PPP access terminal is further provided according to an embodiment of the invention, including:
an address information getting module for receiving the PPP IPCP packet, which is sent by the access server, provided for configure the address information of the provider server, and getting the address information of the provider server from the PPP IPCP packet and transferring the address information to an address information configuration module
an address information configuration module for configuring and storing the address information of the provider server locally.

an access service device is further provided according to an embodiment of the invention, including:
an address information processing module for storing the configured address information of the provider server, or getting remotely the provider server's address information;
an address information sending module for adding the provider server's address information, which is stored in the address information processing module, into the PPP IPCP packet to be sent to the PPP access terminal, and sending the packet.

A method for getting an address of a provider server by a Point-to-Point Protocol (PPP) access terminal is further provided according to an embodiment of the invention, including the following process.
A. when a PPP access terminal is connected to the network through an access service device, the access service device sends the address information of the provider server to the PPP access terminal;
B. after obtaining the address of the provider server, the PPP access terminal configures the address locally.

It can seen from the technical solution provided in the present invention, a method for getting the addresses of a service server and a management server by a terminal in the manner of PPP access, as well as the corresponding PPP access terminal and access service device are provided according to embodiments of the invention. By using this method, work load for configuration during provisioning of the service is reduced and the provider's operation cost is saved.

Additionally, the nomadism of service can be implemented based on the present invention. Particularly, in a visited location network, when being connected to the network, the PPP access terminal can get the address of the service server through the method provided in the present invention, thus the automatic discovery of the service server is implemented and the nomadism of service can be easily achieved.

### Brief Description of the Drawings

Figure 1 is a schematic diagram illustrating the networking of a PPP access network;

Figure 2 is a schematic diagram illustrating the processing flow according to the method of the invention;

Figure 3 is a flowchart illustrating the detailed implementation of a method according to the invention;

Figure 4 is a block diagram showing a PPP access terminal according to the invention;

Figure 5 is a block diagram showing an access service device according to the invention.

### Detailed Description of the Embodiments

The essential of the present invention is to initiatively deliver addresses of a service server and a management server to a user terminal by an access service server (e.g. an access server or an edge router), thus eliminating the trouble to configure corresponding address manually for the user terminal and effectively reducing the work load of configuration for the user terminal. And thus the service server can be automatically discovered when the user nomadizes and then accesses the visited network, thereby the nomadism of service is implemented.

The method according to an embodiment of the invention is shown in Figure 2, including the following processes.

Process 21: the negotiation of link-layer parameters is accomplished between a user terminal and an access service device (ER/BRAS) in a Link Control Protocol (LCP) negotiation phase and a communication link is established;

Process 22: the ER/BRAS sends an IP address for the terminal and addresses of the service server and management server to the user terminal through a PPP IPCP (IP Control Protocol) packet in the Network Control Protocol (NCP) negotiation phase;

Process 23: the user terminal initiates a management registration to a management server;

Process 24: the user terminal initiates a service registration to a service server, and utilizes the service.

Correspondingly, with the process described above, an automatic configuration of the addresses of the service server and the management server will be accomplished by the user terminal, and related service can be available.

For further understanding of the present invention, the embodiment of the method of the present invention will be described in detail with reference to the accompanying drawings.

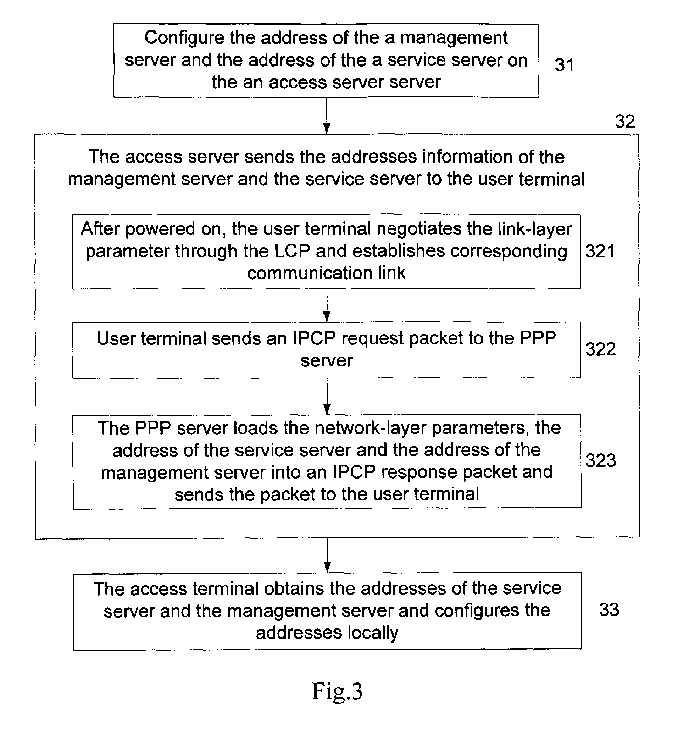

As shown in Figure 3, the method of the present invention particularly includes the following processes.

Process 31: an address of a provider server is set on an access service device.

For example, the address of the provider server may include an address of a terminal management server and/or an address of a service server.

Specifically, the access service device may include a broadband access server or an edge router.

The address of the provider server may be set on a remote device. In this way, the access server needs to obtain remotely the address information of the provider server from the remote device.

In the PPP access mode, the address parameters of the service server and the management server may be configured on a PPP server (e.g., the BRAS and ER), and also may be configured on other servers from which the PPP server can obtain these parameters through some protocols.

The addresses of the service server and the management server may be the IP addresses or the domain names parsed by the Domain Name Server (DNS).

Process 32: when a PPP access terminal (a user terminal) is connected to the network through an access service device (an access server), at a phase of negotiating network-layer parameters with the access service device by the PPP access terminal, the address information of the provider server may be sent to the PPP access terminal through a PPP IPCP packet by the access service device.

For the PPP access mode, an LCP negotiation phase and an NCP negotiation phase are included. At the LCP negotiation phase, the PPP access terminal negotiates the link-layer parameters with the server, and establishes a communication link. At the NCP negotiation phase, the PPP access terminal negotiates the network-layer parameters with the server. For an IP based application, the IPCP protocol may be used to configure related parameters of the IP protocol for a terminal.

Therefore, the detailed procedure of this process may include the following processes.

Process 321: a user terminal is powered on and initiates a PPP access request. When being connected to the network, the user terminal first negotiates the link-layer parameters with the access server (i.e., the PPP server) through the LCP protocol, and establishes corresponding communication link;

Process 322: the PPP access terminal sends, carrying the addresses of the service server and the management server, an IPCP request packet, i.e., a message requesting for the network-layer parameters, to the PPP server to negotiate the IP-layer parameters including the IP addresses;

Process 323: When receiving the message, the PPP server adds the network-layer parameters (IP address), the address of the service server and the address of the management server into an IPCP response packet and sends the IPCP response packet to the PPP access terminal.

In particular, the IPCP protocol is extended so as to implement automatic configuration of the address of service server and the address of management server. The field extended contains IPCP configuration options, and the address of service server and the address of management server are carried in this field.

Process 33, the PPP access terminal obtains the addresses of the service server and the management server and sets the addresses in the PPP access terminal. Then, the PPP access terminal can consume related services using the addresses of the service server and the management server, and accept the management of the management server.

In particular, the PPP access terminal may exchange information with the management server to implement the management registration so as to accept management of the management server. The PPP access terminal may also exchange information with the service server to implement the service registration, and obtains related service information from the service server to utilize the service.

In the present invention, for the PPP server and PPP access terminal supporting the extension described above, the employed PPP protocol may be carried over different lower layer protocols, such as the PPP over Ethernet (PPPoE) and the PPP over ATM (PPPoA).

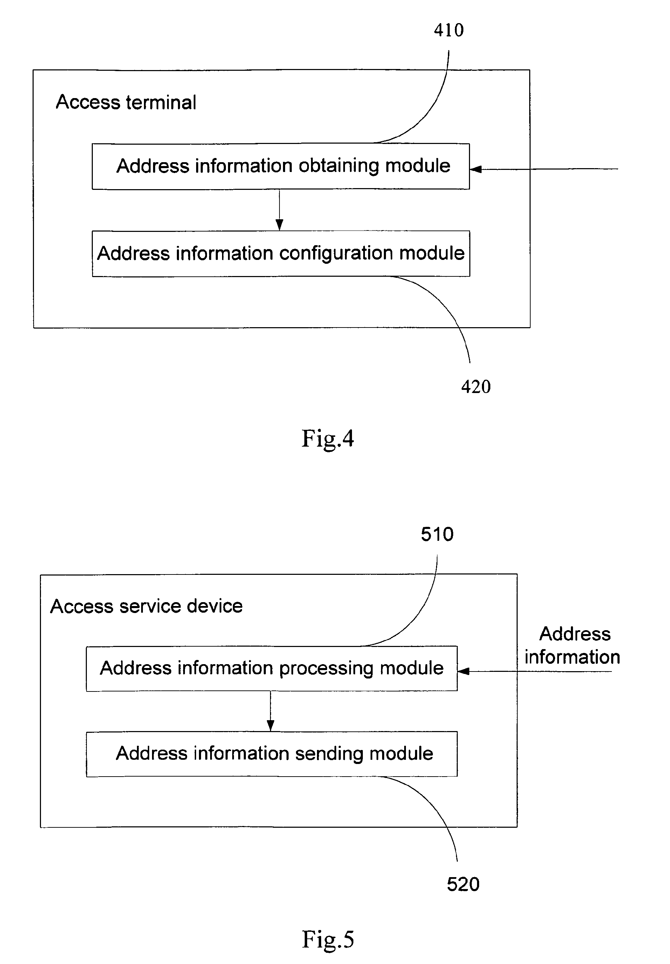

As shown in fig.4, a PPP access terminal is further provided according to an embodiment of the invention, including:

an address information getting module 410 for receiving from the access server the PPP IPCP packet for setting the address information of the provider server, and obtaining the address information of the provider server from the received PPP IPCP packet;

an address information configuration module 420 for setting and storing the address information of the provider server obtained by the address information getting module in the PPP access terminal, so as to implement a configuration of the address of the provider server on the PPP access terminal.

As shown in fig.5, an access service device is further provided according to an embodiment of the invention, including:

an address information processing module 510 for storing the provider server's address information which is set directly by a user or users, or for getting remotely the provider server's address information from remote server so as to configure the address information for the PPP access terminal;

an address information sending module 520 for adding the provider server's address information stored in the address information processing module into the PPP IPCP packet to be sent to the PPP access terminal, and sending the PPP IPCP packet with the provider server's address information to corresponding PPP access terminal.

In summary, a method for getting the addresses of a service server and a management server by a terminal in the PPP access mode is provided according to an embodiment of the invention, thereby the work load for configuration during provisioning of the service is reduced and the operation cost is saved, also the nomadism of service can be implemented.

It should be appreciated that the above description is only the preferable embodiments of the present invention, and is not intended to limit the protection scope of the present invention. Any modifications, equivalent substitution and improvements within the spirit and principles of the invention are intended to be included in the protection scope of the present invention. Therefore, the protection scope of the present invention is defined in the claims.

## Claims

1. A method for getting an address of a provider server by a Point-to-Point Protocol (PPP) access terminal, comprising:
when a PPP access terminal is connected to a network through an access service device, sending, by the access service device , address information of a provider server to the PPP access terminal via an extended PPP IP Control Protocol (IPCP) packet;
obtaining, by the PPP access terminal, an address of the provider server through analyzing the extended PPP IPCP packet and performing configuration of the address in the PPP access terminal.

2. The method for getting an address of a provider server by a Point-to-Point Protocol (PPP) access terminal according to claim 1, wherein the address of the provider server comprises:
an address of a terminal management server and/or an address of a service server.

3. The method for getting an address of a provider server by a Point-to-Point Protocol (PPP) access terminal according to claim 1, wherein the access service device comprises:
a broadband access server and/or an edge router.

4. The method for getting an address of a provider server by a Point-to-Point Protocol (PPP) access terminal according to claim 1, 2, or 3, wherein sending the address information of the provider server to the PPP access terminal by the access service device comprises:
sending the address information of the provider server to the PPP access terminal, during negotiation for network-layer parameters between the PPP access terminal and the access service device, after the PPP access terminal has been connected to the network.

5. The method for getting an address of a provider server by a Point-to-Point Protocol (PPP) access terminal according to claim 4, wherein sending the address information of the provider server to the PPP access terminal further comprises:
sending, by the PPP access terminal, a message for requesting the network-layer parameters to the access service device;
adding, by the access service device, the network-layer parameters, a service server address and a management server address into a response packet and sending the response packet to the PPP access terminal after receiving the message.

6. The method for getting an address of a provider server by a Point-to-Point Protocol (PPP) access terminal according to claim 4 further comprising, before sending the address information of the provider server to the PPP access terminal,
negotiating link-layer parameters and establishing a corresponding communication link between the access terminal and the access service device after the access terminal has been connected to the network.

7. The method for getting an address of a provider server by a Point-to-Point Protocol (PPP) access terminal according to claim 1, 2, or 3, further comprising:
setting the address of the provider server in the access service device.

8. The method for getting an address of a provider server by a Point-to-Point Protocol (PPP) access terminal according to claim 1, 2, or 3, further comprising:
setting the address of the provider server in a remote device, and getting remotely, by the access service device, the address information of the provider server from the remote device.

9. A Point-to-Point Protocol (PPP) access terminal, comprising:
an address information getting module for receiving from an access service device a PPP IPCP packet for configuring address information of a provider server, and obtaining address information of the provider server from the packet;
an address information configuration module for setting and storing the address information of the provider server which is obtained by the address information getting module to the local.

10. An access service device, comprising:
an address information processing module for storing address information of a provider server, or for obtaining remotely the address information of the provider server;
an address information sending module for adding the address information of the provider server obtained by the address information processing module into a PPP IPCP packet to be sent to a PPP access terminal, and for sending the packet.

11. A method for getting an address of a provider server by a Point-to-Point Protocol (PPP) access terminal, comprising:
sending, by an access service device, address information of a provider server to a PPP access terminal when the PPP access terminal is connected to the network through an access service device;
obtaining, by the PPP access terminal, an address of the provider server, and performing configuration in the PPP access terminal.
